# EUROPEAN PATENT APPLICATION

(11) **EP 1 217 816 A1**
(43) Date of publication of application: **26.06.2002**
(21) Application number: 00311664.7
(22) Date of filing: 22.12.2000
(51) Int. Cl.: H04M 7/00, H04Q 3/00, H04L 12/66

(54) **Supporting legacy voice centric services in an IP multimedia network**

(71) Applicant: LUCENT TECHNOLOGIES INC., Murray Hill, New Jersey 07974-0636 (US)
(72) Inventor: Daniel, Elizabeth Mary, Chippenham, Wiltshire SN15 3GL (GB); Grech, Michael Louis Francis, Pewsey, Wiltshire SN9 5AZ (GB); Unmehopa, Musa Raoul, 3813 ZL Amersfoort (NL)
(74) Representative: Buckley, Christopher Simon Thirsk

(57) **Abstract**

The invention proposes a Legacy Emulator Module (LEM), serving as an interface between a CS Domain and an IM Domain, in a multimedia network, for enabling legacy services in the CS Domain to be supported in the IM Domain, said interface acting as (or pretending to be) a gsmSSF to the CS Domain and as an Application Server (AS) to the IM Domain.

## Description

### Field of the Invention

This invention relates to a mechanism for supporting legacy voice centric services in an IP multimedia network, particularly to networks to which a user connects via a mobile terminal.

### Background of the Invention

A great deal of value added services which are available presently in circuit voiced switched mobile networks are equally applicable to voice traffic carried over IP multimedia networks. Examples of such services include, but are not limited to Virtual Private Networks (VPN), call routing, prepay services, number translation services (eg 1-800 services), number portability, short number dialling, location sensitive billing and time based call redirection.

There is currently a great deal of effort put into developing IP multimedia networks. The value added service delivery mechanisms in present day circuit switch mobile networks are generally based on intelligent network (IN) techniques In networks using GSM or UMTS such IN type services are also available to subscribers that roam outside their home network by the use of a standards known as CAMEL (Customised Application for Mobile Network Enhanced Logic). The service delivery mechanisms that are envisaged for IP multimedia networks are expected to be based on Application Programming Interfaces (APIs) such as OSA (Open Services Architecture), Parlay or JAIN.

It is most desirable for a network operator to be able to utilise the investment he has made in the current service delivery platform, that is the intelligent network techniques, in IP Multimedia networks. That is, it is desirable to reuse these 'legacy' services which are currently available on circuit switched mobile networks.

Up to now, attempts to make legacy services available in the IM (IP Multimedia) Domain have centred around a primary concept that the IM Domain must be able to support the 'legacy' service protocol, such as ETSI INAP (Intelligent Network Application Protocol) and CAMEL (Customised Applications for Mobile Enhanced Logic) Application Part (CAP). This has some disadvantages as it is considered as carrying legacy 'baggage' into IM Domain and it is felt that this would lead to a great deal of unnecessary work on the entity running IM call control, which is known as the Call State Control Function (CSCF).

Adding a CAMEL interface to the CSCF has been seen as the most obvious way to ensure that current value added services can be used. However, it is believed that the window of opportunity for reuse of legacy services in the IM Domain is rather narrow, since ultimately it is likely that all services will be conducted over IP multimedia networks, and so the justification for having more than one standardised interface for example (ie OSA as well as CAMEL) for service delivery is seen as being uneconomic and wasteful.

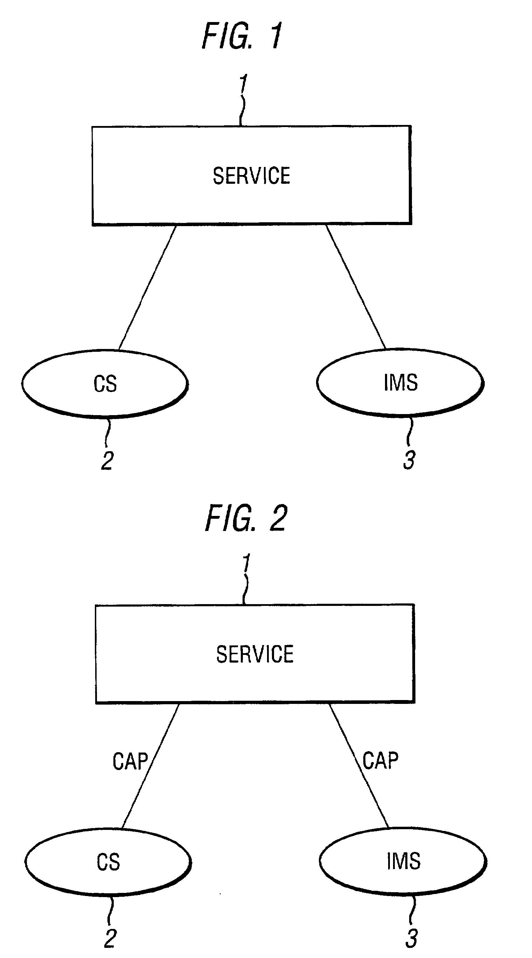

As shown in Figure 1, on a very simplified level, a basic problem is to allow a service, probably stored on an application server, to be accessible both in the circuit switch Domain (CS) 2 and the IP Multimedia Domain (IMS) 3. A single mobile terminal may be able to access both the CS and IM Domain and the user preferably needs to be able to use voice over the circuit switch or IMS (Packet Switch) Domains transparently.

This has up to now involved enabling the IM Domain to support CAMEL application protocols. This is the position shown in Figure 2 where both the Circuit Switch (CS) 2 and packet switch (IMS) 3 Domain use CAP (CAMEL Application Protocol). Current third generation system standards infer that a network uses an OSA gateway to translate between APIs and the CAMEL protocol ie CAP (as defined in document 3G TS 23.127). Further standard documents provide for mapping between APIs and CAP. This approach is based on a view that application servers reside outside the network.

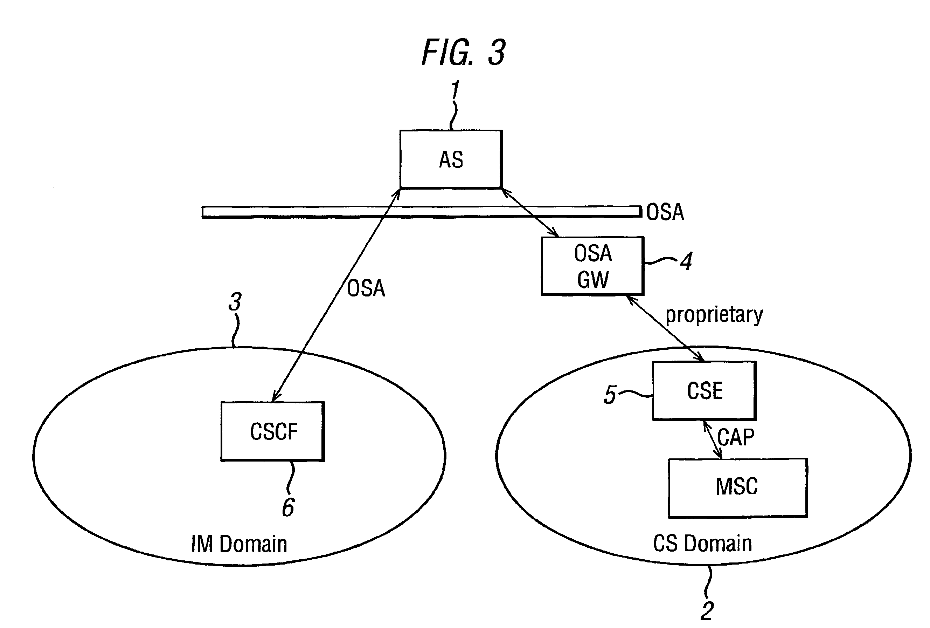

Figure 3 shows the current third generation view of how OSA services are delivered to Circuit Switch (CS) subscribers. OSA APIs are mapped by an OSA gateway 4 to an internal protocol, that is a proprietary protocol, to a CSE (CAMEL Service Environment) 5 within the circuit switch Domain. The CSE then translates this to CAMEL application protocol CAP and/or MAP to an appropriate entity, which will generally either an MSC/VLR (Visiting Location Register) for a roaming network, or an HLR (Home Location Register) for a home network. The OSA API is used to deliver services from the application server 1 to a CAMEL service control function 6 within the IM Domain 3. Thus, the newly deployed OSA API based services can be delivered using legacy service delivery protocols in the CS Domain, while using the OSA API to deliver services in the IM Domain.

MAP and CAP are so-called SS7 protocols. The MAP protocol is an interface used in GSM and UMTS between various network nodes and exists between a gsmSCF (Service Control Function) and HLR, whereas the CAP protocol is an interface between the gsmSCF and the MSC/gsmSSF. In general, MAP is used for mobility management and subscriber data management, whereas CAP is used for call control and service management. Thus, both protocols are hierarchically on the same level, but functionally different.

In order to use the CAP protocol, the CSCF needs a CAP interface and the necessary CAMEL functionality embodied in the GSM Service Switching Function (gsmSSF) as described in the 3GPP standards document 3G TS 23.078. However, CAP interfaces are seen as being complex and too much of a legacy item; there is a resistance to using this.

The present invention arose in an attempt to provide an improved mechanism for supporting legacy voice centric services in an IP multimedia network, without the need for the CSCF to support a CAP interface or CAMEL functionality.

### Summary of the Invention

According to the present invention there is provided a method for supporting legacy voice centric services in an IP Multimedia (IM) network, comprising providing an emulator causing said legacy services to appear to be an API based service as far as the IM system is concerned.

Preferably, the emulator is a gateway providing mapping from CAMEL request and CAP or other Intelligent Network applications onto OSA APIs.

Preferably, the method comprises running a legacy voice service in the Circuit Switched Domain (CS), whereby after a user registers with the IM Domain, messages relevant to the service are directed to and from the IM Domain to the emulator, via OSA protocols, mapped from OSA to relevant INAP protocols and directed to and from the emulator as CAP messages to the CS Domain.

According to the present invention there is further provided a multimedia network comprising a node providing mapping between CAMEL information and OSA APIs.

Preferably, the network comprises a legacy voice service provided in the CS Domain, wherein the node is adapted to receive and send messages relevant to the service, via OSA protocols to and from the IM Domain, map the OSA to relevant INAP protocols and receive the messages to and from the CS Domain as CAP messages.

According to the present invention there is further provided a node for an IP Multimedia network, functioning to map OSA API messages to CAP signalling messages.

The invention further provides an interface between a CS Domain and an IM Domain, in a multimedia network, for enabling legacy services in the CS Domain to be supported in the IM Domain, said interface acting as a gsmSSF to the CS Domain and as an Application Server (AS) to the IM Domain.

### Description of the Drawings

Embodiments of the invention will now be described, by way of example only, with reference to the accompanying drawings, in which:
Figure 1 shows a simplified network comprising a circuit switch Domain, a packet switch Domain and a legacy server;
Figure 2 shows a previously proposed method for enabling the legacy service to be available in circuit switched and packet switched Domain;
Figure 3 shows a more detailed view of delivery of OSA services to circuit switched and a packet switched Domain;
Figure 4 shows a mechanism according to the present invention for supporting legacy services;
Figure 5 shows an example information; and
Figure 6 shows an example of architecture for a legacy emulating module.

### Description of Preferred Embodiments of the Invention

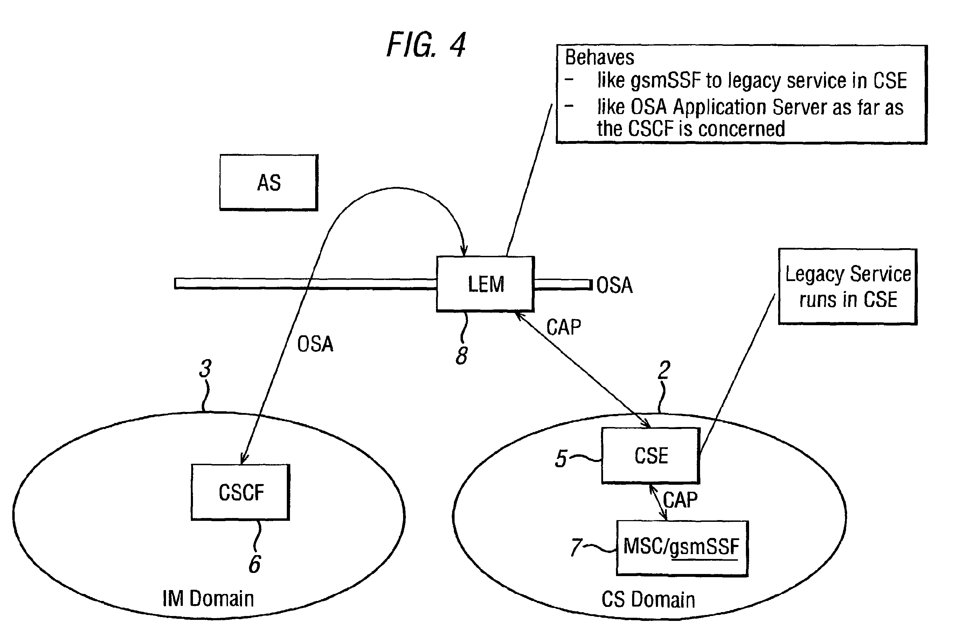

Referring now to Figure 4, a mechanism for supporting legacy services is shown schematically. Similarly to Figure 3 (described above), the figure shows generally the CS Domain 2 with a CSE 5 and MSC 7. Also, the IP Multimedia Domain (IM) 3 provides a Call State Control Function CSCF 6. Note that MS in the circuit switch Domain 7 may also be a gsmSSF (GSM Service Switching Function).

It is considered that the legacy service, whatever it may be, runs on the CSE and the network operator wishes to have this service available to both CS and IM Domains. An additional gateway 8, which will be known herein as the Legacy Emulator Module (LEM) is provided and the function of this will be described below.

When the particular legacy service is deployed, a set of CAMEL Subscription Information (CSI) is activated for the user subscribed to that service. CSI comprises data that is sent to an MSC when a user registers and is in effect a set of triggering criteria that have to be satisfied and may also include address details, identification of service logic and so on. The CSI may take various forms such as O-CSI (Originating CSI for CAMEL services for mobile originating calls), T-CSI (Terminating CSI for CAMEL services for mobile terminating calls in a Gateway MSC), VT-CSI (Visited Terminating CSI for CAMEL services for mobile terminating calls in a Visited MSC), SMS-CSI (for short messaging), and so on. The various types and functioning of CSI are well known in the art.

When a subscriber registers with the IM Domain, the LEM 8 is arranged to send a request to the CSCF 6 (being the CSCF with which the subscriber is registered), asking the CSCF to notify the LEM when particular call event criteria are met, depending upon the type of service available or required. Subsequently, when the CSCF receives a call set up request for a subscriber that has certain service triggers, the CSCF interrupts call processing and notifies the LEM that the required call triggers have been reached. The LEM contacts the CSE and invokes the service logic in the CSE via the usual legacy protocol, indicating that a call has been attempted by the subscriber. The service logic in the CSE then instructs the LEM as to how the call is to proceed. Note that this communication between the LEM and CSE is done via CAP and thus that a proprietary interface is not required.

After the service logic in the CSE instructs the LEM as to how the call is to proceed, the LEM then translates these to OSA service requests and indicates to the CSCF how the call is to proceed. Further call events are reported to the LEM by the CSCF depending on the outcome of the call. The LEM translates these events to CAP and MAP messages and the service logic sends appropriate instructions. This can then continue for further events depending on the service logic.

Accordingly, the LEM is so arranged that it behaves as a gsmSSF to legacy services in the CSE (using CAP) but also behaves as if it is an 'OSA client' residing on an Application Server (AS) as far as the CSCF 6 in the IM Domain is concerned. It will be noted from Figure 4 that an application server 1 may not necessarily be part of the network operator's domain.

In other words, the LEM is a new gateway which fools the 'legacy' service logic in the CSE that it is communicating with a gsmSSF and at the same the CSCF thinks it is communicating with an Application Server (AS). Note that CSCF will, by third Generation (3G) standards such as standard number 3G TS 23.228 already have CAMEL, OSA and SIP interfaces. The LEM proxies requests between the CSCF and the legacy service in the CS and maps OSA API messages from the CSCF to CAP signalling message for the CSE.

Some CAP parameters cannot be extracted from API methods. Accordingly, in some embodiments of the invention, in order to intelligently populate CAP parameters that cannot be extracted from the API methods, it is necessary to have an interface from the LEM to the HLR (MSC) to obtain any information relating to the status of the subscriber.

It will be noted that CAMEL subscription information CS is still used in the CS Domain. The LEM accordingly will in general need to be able to know the CSI associated with each subscriber. This can be achieved by the HLR sending all the required CSI to the LEM when a user registers in the IM Domain.

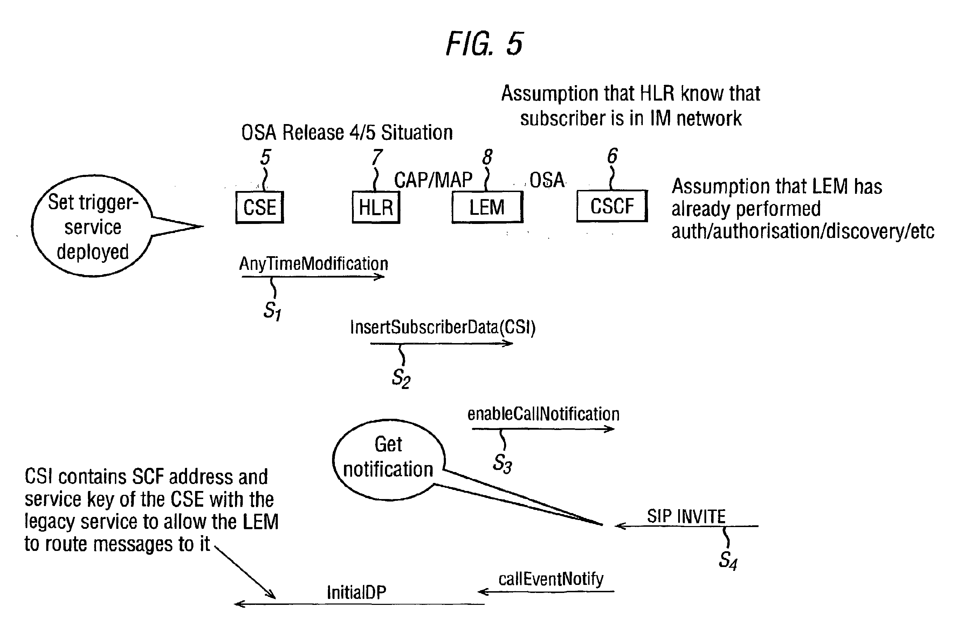

Figure 5 shows an example of information flow in a system according to the present invention. It shows one possible situation where the OSA is OSA release 4/5. The signal flows are between a CSA 5, an HLR 7, LEM 8 and CSCF 6. As shown signals between the HLR and LEM will generally be by CAP and/or MAP protocols and signals between the LEM and the CSCF will be by OSA. Signals between the CSE and the LEM will be based on CAP.

In an initial registration phase, when a user first registers, there is some initial signalling when the user registers at the HLR and the setting up of CAMEL phase support. The set trigger service is deployed and an AnyTimeModification signal S1 passes from the CSE to the HLR. When the HLR knows that the subscriber is in the IM network, an Insert Subscriber Data (which contains the relevant CSIs for the subscriber) message S2 is sent from the HLR to the LEM. This identifies the CSE. The LEM then, assuming it has already performed authorisation, discovery and other functions, issues an enable call notification signal S3 to the CSCF. The user would have all the necessary service triggers set to handle service interaction for originating and terminating calls. Subsequently, if the user wishes to make a call or otherwise use the service, an SIP invite signal S4 is received at the CSCF from a mobile terminal (not shown). This then issues a call event notify signal, using OSA, to the LEM 8. The LEM, using CAP or MAP for example, issues an Initial DP (Detection Point) signal through the CSE. At this stage, the CAMEL Subscription Information (CSI) contains address of the CSE and a reference to the service logic that should be invoked to allow the LEM to route messages to it.

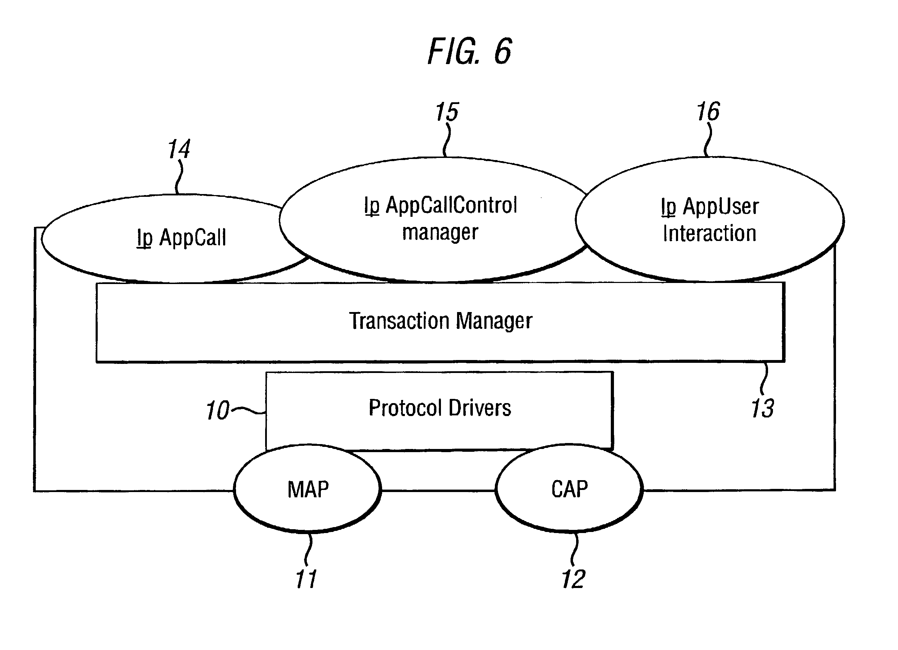

Figure 6 shows a possible architecture for an LEM, which it will be recalled acts as a gateway. The functionality of the entity may include protocol drivers 10, with MAP and CAP interfaces 11, 12 respectively. A transaction manager 13 controls and interfaces with further functionality, including Ip App Cad 14, Ip App Call Control Manager 15 and Ip App User Interaction, for messaging to and from the IM Domain. Each of these functionalities are known per se to those skilled in the art.

It will be accordingly be seen that the LEM gateway is in effect acting as a switch.

Embodiments of the present invention accordingly allow CAMEL, or other INAP based services, generally from the Circuit Switch (CS) Domain to be applied to networks which only support APIs. The invention has a benefit that it is considered to be cheaper than developing a 'legacy' protocol interface on each CSCF which would need to be proprietary. The mechanism can also serve as an overlay solution over standardised IM core networks and has no impact on existing entities in the IP multimedia network.

Furthermore, it is believed that embodiments of the invention are presently fully compliant with current 3 GPP/Parlay standards.

The present CAMEL standard is defined in the documents 3G TS22.078, TS 23.078 V3.6.0 (2000-09) and TS29.078 V3.6.0 (2000-09), published by 3GPP (3^{rd} Generation Partnership Project). 650 Route des Lucioles, Sophia Astipolis, Valbonne, France; http://www.3gpp.org. A further document 3G TS 23.228 gives an over view of the network architecture of the IM Domain. Document 3G TS 29.998 describes a mapping between OSA APIs and network protocols.

## Claims

1. A method for supporting legacy voice centric services in an IP Multimedia (IM) Network, comprising providing an emulator causing said legacy services to appear to be an API based service to the IM Network.

2. A method as claimed in claim 1, wherein the emulator is a gateway providing mapping between Intelligent Network (IN) applications and OSA APIs.

3. A method as claimed in Claim 2, wherein the IN application is CAMEL based, running the CAMEL Application Protocol (CAP).

4. A method as claimed in Claim 1, comprising running a legacy voice service in the Circuit Switched Domain (CS), whereby after a user registers with the IM Domain, messages relevant to the service are directed to and from the IM Domain to the emulator, via OSA protocols, mapped from OSA to relevant INAP protocols and directed to and from the emulator as CAP messages to the CS Domain.

5. A method as claimed in Claim 4, wherein the legacy service is run on a CAMEL Service Environment (CSE) and the Emulator and CSE communicate via CAP.

6. A method as claimed in Claim 5, wherein the emulator appears to be a gsm Service Switching Function (gsmSSF) to the CSE.

7. A multimedia network comprising a node providing mapping between intelligent network application and OSA APIs.

8. A network as claimed in Claim 7, wherein the node is an emulator configured as a gateway providing mapping between IN applications and OSA APIs.

9. A network as claimed in Claim 8, wherein the IN application is CAMEL Application Protocol (CAP), the node providing mapping between CAP and OSA.

10. A network as claimed in Claim 9, comprising a legacy voice service provided in the CS Domain, wherein the node is adapted to receive and send messages relevant to the service, via OSA protocols to and from the IM Domain, map the OSA to relevant INAP protocols and receive the messages to and from the CS Domain as CAP messages.

11. A network as claimed in Claim 10, comprising a CSE, on which the legacy service is run.

12. A network as claimed in Claim 10 or 11, wherein the legacy service comprises one or more of VPN, call routing, prepay services, number translation, number portability, short number dialling, location sensitive billing, personal numbering and call redirection.

13. A network as claimed in any of Claims 7 to 12, wherein the node interfaces with an HLR (Home Location Register).

14. A node for an IP Multimedia network, functioning to map OSA API messages to CAP signalling messages.

15. An interface between a CS Domain and an IM Domain, in a multimedia network, for enabling legacy services in the CS Domain to be supported in the IM Domain, said interface acting as a gsmSSF to the CS Domain and as an Application Server (AS) to the IM Domain.

16. A method as claimed in any of Claims 1 to 6, wherein the legacy services one or more of VPN, call routing, prepay services, number translation, number portability, short number dialling, personal numbering, location sensitive billing and call redirection.
